# EUROPÄISCHE PATENTSCHRIFT

(11) **EP 0 985 868 B1**
(45) Veröffentlichungstag und Bekanntmachung des Hinweises auf die Patenterteilung: **08.11.2006**
(21) Anmeldenummer: 99117288.3
(22) Anmeldetag: 02.09.1999
(51) Int. Cl.: F21V 8/00

(54) **Leuchtkörper**
Luminous body
Corps lumineux

(30) Priorität: 11.09.1998 DE 19841888
(43) Veröffentlichungstag der Anmeldung: 15.03.2000
(73) Patentinhaber: Karl, Gerhard, Dipl.-Phys., D-97267 Himmelstadt (DE)
(72) Erfinder: Karl, Gerhard, Dipl.-Phys., D-97267 Himmelstadt (DE)
(74) Vertreter: Pöhner, Wilfried Anton, Dr.

(56) Entgegenhaltungen:
- EP-A- 0 621 500
- EP-A- 0 879 991
- DE-A- 3 223 706
- FR-A- 2 678 758
- US-A- 4 673 254
- "AUXILIARY LIGHTING DEVICE FOR REFLECTIVE LIQUID CRYSTAL DISPLAYS" IBM TECHNICAL DISCLOSURE BULLETIN,US,IBM CORP. NEW YORK, Bd. 40, Nr. 2, Seite 89-90 XP000692181 ISSN: 0018-8689

## Beschreibung

Die Erfindung betrifft einen Leuchtkörper, insbesondere für nicht transparente Vorlagen, mit einer Lichtquelle und einer durchsichtigen Scheibe, an deren einer Außenfläche sich die Vorlage befindet, wobei die Lichtquelle so angeordnet ist, dass Licht an zumindest einer Stirnseite in die Scheibe eindringt und darin durch Totalreflexion geleitet wird, sowie die Scheibe auf der von der Vorlage abgewandten Außenfläche Störpunkte enthält, welche die Totalreflexion aufheben, sodass Licht aus der Scheibe herausgestreut wird.

Leuchtkörper zum flächigen Ausleuchten von Vorlagen sind aus der DE 32 23 706 C2 bekannt. Er besteht aus einer planparallelen Scheibe, die an einer Stirnseite beleuchtet ist und das Licht durch Totalreflexion entlang den planparallelen Außenflächen leitet, während Störpunkte in einer oder beiden planparallelen Außenflächen die Totalreflexion aufheben. Das dort gestreute Licht kann die planparallele Scheibe über die mit dem Störpunkt versehene oder die entgegengesetzte Außenfläche verlassen und durchdringt die transparente Vorlage, die sich auf der dem Betrachter zugewandten Seite der planparallelen Scheibe befindet. Die planparallele Scheibe bewirkt eine über die gesamte Oberfläche verteilte Lichtemission, welche transparente Vorlagen wie Röntgenbilder oder Dias flächig durchleuchtet. Dabei kann sich die Vorlage entweder auf der mit Störpunkten versehenen Seite oder der entgegengesetzten Seite der planparallelen Scheibe befinden. Derartige Leuchtkörper sind jedoch nicht zur Ausleuchtung von nicht transparenten Vorlagen geeignet. Das von der nicht transparenten Vorlage emittierte Licht muss nämlich die planparallele Scheibe auf dem Weg zum Betrachter nochmals durchlaufen. Der Betrachter wird dabei durch Licht gestört, das von der planparallelen Scheibe direkt in seine Richtung emittiert wird, ohne die Vorlage abzubilden. Dieser Lichtanteil verlässt die planparallele Scheibe nicht nur ungenutzt, sondern stört den Betrachter durch Blendung und vermindert damit die Erkennbarkeit der Vorlage erheblich.

Die EP 06211500 A1 zeigt bereits einen Leuchtkörper, dessen Störpunkte durch eine geometrische Verformung der Scheibenoberfläche insbesondere in kugelförmiger Art erzeugt wird. Etwaig aufgebrachte Schichten sind vollflächig angeordnet. Die FR 2678758 schließlich zeigt einen Hohlkörper, in dessen Inneren ein Diffusionsband verläuft.

Die Erfindung hat sich demgegenüber die Angabe die Aufgabe gestellt, einen Leuchtkörper zu schaffen, der eine Auflichtbetrachtung nichttransparenter Vorlagen bei hoher optischer Qualität erlaubt.

Diese Aufgabe wird erfindungsgemäß dadurch gelöst, dass die Scheibe planparallel ist, zumindest ein Teil der Störpunkte durch weißen oder farbigen Druck auf der Scheibenoberfläche gebildet ist, die Störpunkte außenseitig von jeweils einer lichtundurchlässigen Schicht bedeckt sind, deren Fläche größer oder gleich der des jeweiligen Störpunktes ist.

Die Störpunkte sind durch weißen oder farbigen Druck auf der Scheibenoberfläche aufgebracht. Das einfallende Licht wird dort gestreut und ein Teil, unter Umständen nach zusätzlicher Reflexion an der abdeckenden Reflektorschicht, in Richtung Vorlage gesandt. Im Falle eines farbigen Drucks ist die Streuung farbselektiv, so dass dieselbe Wirkung wie mit einem Filter entsprechender. Farbcharakteristik erreichbar ist.

Die lichtundurchlässigen Schichten sind groß genug, dass sie die Störpunkte vollständig bedecken und damit Verhindern, dass Licht von den Störpunkten auf der von der Vorlage abgewandten Seite aus der planparallelen Scheibe herausgestreut wird. Das von der Vorlage ausgesandte Licht dagegen kann die planparallele Scheibe durchlaufen, da zwischen den Störpunkten keine lichtundurchlässigen Bereiche angebracht ist. Diese Maßnahmen ermöglichen sowohl die Durchlichtbetrachtung transparenter Vorlagen als auch die Auflichtbetrachtung nicht transparenter Vorlagen. In jedem Falle ist die Vorlage auf der Seite der planparallelen Scheibe anzuordnen, die keine Störpunkte enthält. Bei Auflichtbetrachtung befindet sich der Betrachter auf der von der Vorlage abgewandten Seite, das Licht muß also die planparallele Scheibe nochmals durchlaufen, während bei Durchlichtbetrachtung der Betrachter sich auf der Seite der Vorlage befindet. Das von der Vorlage aus gesandte Licht durchläuft dann die planparallele Scheibe auf dem Weg zum Betrachter nicht mehr.

Zur Unterbindung der Blendwirkung ist das Anbringen einer lichtundurchlässigen Schicht ausreichend. Bevorzugt ist jedoch, die lichtundurchlässige Schicht als Reflektorschicht zu realisieren, da in einem solchen Fall das auftreffende Licht wieder zurück ins Innere der Scheibe geleitet und zur Ausleuchtung der Vorlage genutzt wird. Die Lichtenergie geht insoweit nicht verloren.

Im Falle einer Auflichtbetrachtung kann von außen einfallendes Licht an Reflektorschichten in Richtung Betrachter reflektiert werden. Zur Abhilfe wird vorgeschlagen, die Reflektorschichten außen durch lichtabsorbierende Schichten abzudecken. Eine elegante Lösung zur Erzeugung der lichtabsorbierenden Schicht besteht im Aufbringen eines Druckes von schwarzer Farbe.

Da ein Teil des von der Lichtquelle emittierten Lichtes die planparallele Scheibe nach Streuung an Störpunkten verlässt und entferntere Bereiche der planparallelen Scheibe demzufolge nicht mehr erreichen kann, ist bei gleichmäßiger Anordnung der Störpunkte die von der planparallelen Scheibe ausgesandte Lichtintensität mit wachsender Entfernung zur Lichtquelle geringer. Zur Kompensation wird vorgeschlagen, die Störpunktdichte mit wachsendem Abstand zur Lichtquelle zu erhöhen, sodass die Ausleuchtung der Vorlage über die gesamte Scherben-Oberfläche gleichmäßig ist. Unter dem Begriff zunehmender Stördichte ist sowohl die Zunahme der Punktezahl pro Fläche unter Beibehaltung der Punktgröße als auch - unter Beibehaltung der Punktezahl pro Fläche - die flächenmäßige Vergrößerung jedes einzelnen Störpunktes zu verstehen.

Die Form der Störpunkte ist in weiten Grenzen beliebig und sie kann insbesondere die einer Scheibe oder einer Linie z. B. nach Art einer Geraden sein. Optimale Behältnisse erhält man dann, wenn die Form der Störpunkte an die der abzubildenden Vorlage angepaßt ist und so gewählt wird, daß eine optimale Ausleuchtung und damit Abbildungsqualität erreicht wird.

Das Aufbringen der Reflektor- oder Absorberschicht ist allerdings, beispielsweise im Siebdruckverfahren, einfacher durchführbar, wenn der zu beschichtende Flächenanteil über die gesamte Scheibenoberfläche gleich bleibt. Daraus resultiert, daß auch Teile der Scheibenoberfläche, an denen sich kein Störpunkt befindet, unnötigerweise abgedeckt werden, was zur Folge hat, daß bei Auflichtbetrachtung von der Vorlage ausgehende Lichtstrahlen reflektiert werden. Diesem Nachteil jedoch stehen geringere Herstellungskosten gegenüber. Ein weiterer erheblicher Vorteil besteht darin, daß bei gleichbleibenden Abmessungen der reflektierenden und/oder absorbierenden Schichten, die sich im Bereich der Störpunkte befinden, ein für den Betrachter über die gesamte Fläche der Scheibe gleichmäßiger optischer Eindruck entsteht. Für das Auge liegen somit homogene Verhältnisse vor. Würde man die Größe dieser reflektierenden und/oder absorbierenden denen der Störpunkte anpassen, würde sich ein auch für das Auge erkennbarer optischer Verlauf ergeben. Im Falle der außenseitigen Anbringung einer absorbierenden Schicht ist immer sicherzustellen, daß sie der Größe der reflektierenden entspricht, da im Fall der geringeren Ausdehnung der reflektierenden Schicht die darüber hinaus sich erstreckende absorbierende Schicht zu einer Absorbtion des Lichtes an der Innenseite führen würde. Ein Verlust an Lichtenergie wäre die Folge. Bei Einsatz einer reflektierenden Schicht, die größer ist als die der Störpunkte, würde das auftreffende Licht nach innen reflektiert werden und wäre nicht verloren. Eine nur lichtundurchlässige Schicht hingegen werde auch das von der Innenseite her auftreffende Licht absorbieren.

Bei Auflichtbetrachtung kann die Vorlage nicht, wie bei Betrachtung von transparenten Vorlagen üblich, auf einer transparenten Tafel, die durch die planparallele Scheibe flächig ausgeleuchtet ist, befestigt werden, sondern ist vom Betrachter gesehen hinter der planparallelen Scheibe anzubringen. Daher wird in vorteilhafter Ausbildung der Erfindung die Vorlage von einem Rahmen lösbar befestigt, der auch die planparallele Scheibe trägt.

Bei Durchlichtbetrachtungen ist dem Betrachter diejenige Seite der planparallelen Scheibe zugewandt, die keine Störpunkte aufweist, während er bei Auflichtbetrachtung auf die gegenüberliegende Seite der planparallelen Scheibe blickt. Zur Umstellung von transparenten auf nicht transparente Vorlagen und umgekehrt muß also die planparallele Scheibe gegenüber dem Betrachter gedreht werden. Dies ist möglich durch Verdrehung des Rahmens als Ganzes oder eine Wendevorrichtung, die eine Seitenvertauschung der planparallelen Scheibe relativ zum Rahmen gestattet. Befestigungselemente für die Vorlage können dabei zweckmäßigerweise mit der planparallelen Scheibe vedreht werden.

Zur Herstellung der lichtundurchlässigen und/oder absorbierenden Schichten können ebenfalls die Methode des Siebdruckes oder als Alternative das Aufdampfen Verwendung finden. Insbesondere bei der Herstellung reflektierender Schichten erweist sich die durch das Aufdampfen erreichbaren höheren Qualitäten und damit das verbesserte Reflektionsverhalten als entscheidender Vorzug.

Weitere Einzelheiten, Merkmale und Vorteile der Erfindung lassen sich dem nachfolgenden Beschreibungsteil entnehmen, in dem anhand von Zeichungen Ausführungsbeispiele der Erfindung näher erläutert sind. Dabei zeigen in prinzipienhafter Darstellung
- **Figur 1**: den gesamten erfindungsgemäßen Leuchtkörper
- **Figur 2**: die planparallele Scheibe in alternativer Ausbildung und
- **Figur 3**: einen erfindungsgemäßen Leuchtkörper mit Rahmen und Wendevorrichtung

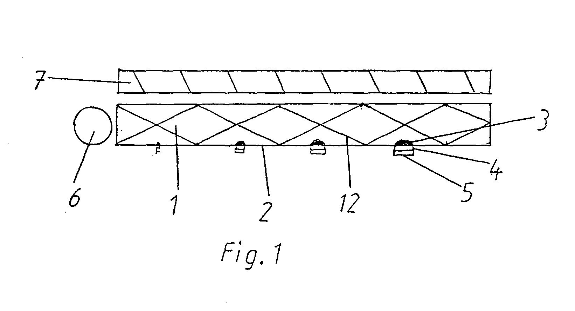

Figur 1 stellt den erfindungsgemäßen Leuchtkörper im Querschnitt dar. Von einer Lichtquelle (6) gelangt Licht stirnseitig in eine planparallele Scheibe (1) und wird dort in Längsrichtung durch Totalreflexion an den Außenflächen geleitet. Auf der einen Seite der planparallelen Scheibe (1) befindet sich die Vorlage (7), die beleuchtet wird, indem Lichstrahlen (12) Störpunkte (3) an der von der Vorlage angewandten Außenfläche (2) der planparallelen Scheibe (1) erreichen und von dort in Richtung der Vorlage (7) gestreut werden. Bei Durchlichtbetrachtung transparenter Vorlagen (7) durchläuft der Lichtstrahl die Vorlage (7) und erreicht den Betrachter auf direktem Wege. Bei Auflichtbetrachtung nicht transparenter Vorlagen (7) dagegen befindet sich der Betrachter auf der anderen Seite der planparallelen Scheibe (1), und von der Vorlage (7) ausgehende Lichtstrahlen durchlaufen auf dem Weg zum Betrachter die planparallele Scheibe (1) erneut. Reflektorschichten (4) bedecken die Störpunkte (3) und verhindern, daß von Störpunkten (3) gestreutes Licht den Betrachter auf direktem Wege erreicht, ohne dabei die Vorlage (7) zu durchlaufen. Da absorbierende Schichten (5) die Reflektorschichten (4) bedecken, wird kein von außen einfallendes Licht in Richtung des Betrachters reflektiert. Damit über die gesamte Oberfläche der planparallelen Scheibe (1) eine gleichmäßige Lichtmenge pro Fläche ausgestreut wird, nimmt die Größe der Störpunkte, mit wachsender Entfernung von der Lichtquelle zu. Gleiches gilt für die Größe der Reflektorschichten (4) sowie der absorbierenden Schichten (5), so daß die Störpunkte (3) kongruent überdeckt sind. Zwischen den Störpunktene (3) ist keine Reflektorschicht (4) vorhanden, sodaß von der Vorlage (7) ausgehende Lichtstrahlen die planparallele Scheibe (1) ungehindert passieren können.

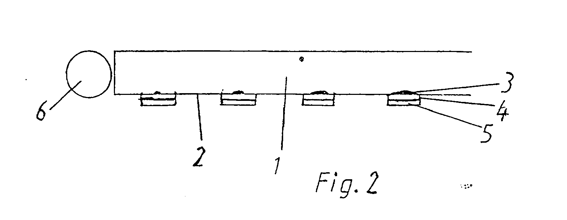

Figur 2 zeigt einen Querschnitt durch eine planparallele Scheibe (1) mit Störpunkten (3), reflektierenden Schichten (4) und absorbierenden Schichten (5) in alternativer Ausbildung. In diesem Fall nimmt die Größe der Störpunkte (3) mit dem Abstand zur Lichtquelle (6) zu, während die Größe der Reflektorschichten (4) und der absorbierenden Schichten (5) gleich bleiben. Diese Schichten bedecken die Störpunkte (3) an den von der Lichtquelle (6) entferntesten Teilen der planparallelen Scheibe gerade noch, während ihre Ausdehnung in der Nähe der Lichtquelle (6) erheblich größer als die der Störpunkte (3) ist. Damit lassen sich, die Reflektorschichten (4) und die absorbierenden Schichten (5) im Siebdruckverfahren über die gesamte Fläche der planparallelen Scheibe (1) gleichmäßig aufzubringen, was die Herstellung erheblich vereinfacht. Daß dabei ein unnötig hoher Anteil der Oberfläche bedeckt ist, beeinträchtigt die Funktion des Leuchtkörpers nur unerheblich.

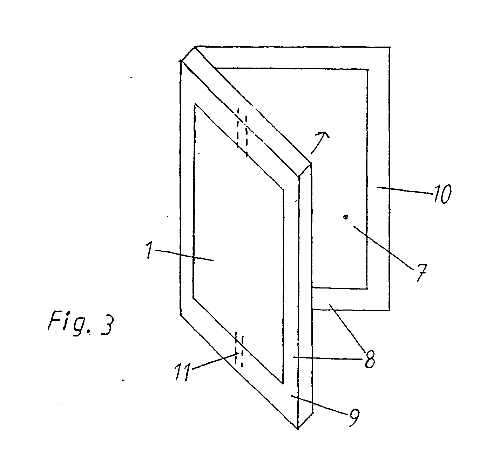

Figur 3 zeigt einen erfindungsgemäßen Leuchtkörper in perspektivischer Darstellung, bei dem planparallele Scheibe (1) und Vorlage (7) von einem hier aufgeklappten Rahmen (8) aufgenommen werden. Zusammengesetzt ist der Rahmen (8) aus Seitenteilen (9) und einer Rückwand (10), an der die Vorlage (7) im Falle einer Auflichtbetrachtung anliegt. Nach Zusammenklappen von Seitenteilen (9), die in diesem Spezialfall die planparallele Scheibe (1) aufnehmen, und Rückwand ist die Betrachtung der Vorlage (7) möglich. Über eine Wendevorrichtung (11), gebildet durch eine Drehachse, kann die planparallele Scheibe (1) gegenüber dem Rahmen (8), insbesondere dessen Seitenteilen (9), gewendet werden. Zur Durchlichtbetrachtung wird eine Vorlage an der von der Rückwand (1) abgewandten Seite der planparallelen Scheibe (1) angebracht. Alternativ dazu ist auch denkbar, daß der Rahmen (8) keine Wendevorrichtung aufweist und stattdessen als Ganzes gedreht werden kann. In diesem Fall muß die Rückwand (10) durchsichtig sein, damit auch Durchlichtbetrachtung möglich ist.

## Patentansprüche

1. Leuchtkörper, insbesondere für nicht transparente Vorlagen,
mit einer Lichtquelle (6) und einer durchsichtgen Scheibe (1), an deren einer Außenfläche sich die Vorlage (7) befindet, wobei die Lichtquelle (6) so angeordnet ist, dass Licht an zumindest einer Stirnseite in die Scheibe (1) eindringt und darin durch Totalreflexion geleitet wird, sowie die Scheibe (1) auf der von der Vorlage abgewandten Außenfläche (2) Störpunkte (3) enthält, welche die Totalreflexion aufheben, sodass Licht aus der Scheibe (1) herausgestreut wird,
**dadurch gekennzeichnet, dass**
- die Scheibe (1) planparallel ist,
- zumindest ein Teil der Störpunkte (3) durch weißen oder farbigen Druck auf der ScheibenOberfläche gebildet ist,
- die Störpunkte (3) außenseitig von jeweils einer lichtundurchlässigen Schicht bedeckt sind,
- deren Fläche größer oder gleich der des jeweiligen Störpunktes (3) ist.

2. Leuchtkörper nach Anspruch 1, **dadurch gekennzeichnet, daß** die lichtundurchlässige Schicht eine Refelektorschicht (4) ist.

3. Leuchtkörper nach Anspruch 1 oder 2, **dadurch gekennzeichnet, daß** die lichtundurchlässige Schicht auf ihrer Außenseite von jeweils einer lichtabsorbierenden Schicht (5) bedeckt sind.

4. Leuchtkörper nach einem der vorhergehenden Ansprüche, **dadurch gekennzeichnet, daß** die Dichte und/oder flächige Ausdehnung der Störpunkte (3) mit Entfernung von der Lichtquelle (6) zunimmt.

5. Leuchkörper nach einem der vorhergehenden Ansprüche, **dadurch gekennzeichnet, daß** die Störpunkte (3) als Scheiben und/oder Linien geformt sind.

6. Leuchtkörper nach Anspruch 4, **dadurch gekennzeichnet, daß** der Anteil der von den lichtundurchlässigen Schichten (4) und/oder absorbierenden Schichten (5) überdeckten Fläche an der Scheibenoberfläche unabhängig vom Abstand von der Lichtquelle (6) konstant ist.

7. Leuchkörper nach einem der vorhergehenden Ansprüche, **dadurch gekennzeichnet, daß** die lichtundurchlässigen Schichten und/oder absorbierenden Schichten durch Siebdruck aufgebracht und/oder durch Aufdampfen erzeugt sind.

8. Leuchtkörper nach einem der vorhergehenden Ansprüche, **gekennzeichnet durch** einen Rahmen (8), der die planparallele Scheibe (1) trägt und die Vorlage (7) lösbar aufnimmt.

9. Leuchtkörper nach Anspruch 8, **gekennzeichnet durch** eine Wendevorrichtung (11), die eine Seitenvertauschung der planparallelen Scheibe (1) gegenüber dem Rahmen (8) ermöglicht.

10. Leuchtkörper nach Anspruch 8 oder 9, **dadurch gekennzeichnet, daß** die elektronischen Bauelemente im Rahmen (8) untergebracht sind.

## Claims

1. Luminaire, in particular for non-transparent objects, comprising a light source (6) and a transparent disc (1), on the outer surface of which the object (7) is located, the light source (6) being arranged such that light is transmitted via at least one face side into the disc (1) and is guided there by total reflection, and the disc (1) contains, on the outer face (2) facing away from the object, interference points (3), which cancel the total reflection so that the light is scattered out of the disc (1), **characterised in that**
- the disc (1) is plane parallel,
- at least a portion of the interference points (3) are formed by white or coloured printing on the disc surface,
- the interference points (3) are covered at the outside by a non-light-transmitting layer in each case,
- the area of which is larger or equal to the area of the respective interference point (3).

2. Luminaire according to claim 1, **characterised in that** the non-light-transmitting layer is a reflector layer (4).

3. Luminaire according to claim 1 or 2, **characterised in that** the non-light-transmitting layer is covered on its outer side by a light-absorbing layer (5) in each case.

4. Luminaire according to one of the preceding claims, **characterised in that** the density and/or the planar extension of the interference points (3) increases with the distance from the light source (6).

5. Luminaire according to one of the preceding claims, **characterised in that** the interference points (3) are formed as discs and/or lines.

6. Luminaire according to claim 4, **characterised in that** the proportion of the area of the disc surface that is covered by the non-light-transmitting layers (4) and/or absorbing layers (5) is constant independently of the distance from the light source (6).

7. Luminaire according to one of the preceding claims, **characterised in that** the non-light-transmitting layers and/or absorbing layers are applied by screen printing and/or by vapour deposition.

8. Luminaire according to one of the preceding claims, **characterised by** a frame (8) that supports the plane-parallel disc (1) and detachably receives the object (7).

9. Luminaire according to claim 8, **characterised by** a turning device (11), which permits exchange of the sides of the plane-parallel disc (1) with respect to the frame (8).

10. Luminaire according to claim 8 or 9, **characterised in that** the electronic devices are accommodated in the frame (8).

## Revendications

1. Dispositif éclairant, notamment pour les documents non transparents,
• avec une source lumineuse (6) dans un disque transparent (1) sur l'une des surfaces duquel se trouve le document (7), sachant que la source lumineuse (6) est disposée de façon à ce que de la lumière pénètre sur au moins un des faces dans le disque 1) et y est conduite par réflexion totale, le disque contenant des points de perturbation (3) sur sa face extérieure (2) opposée au document, lesquels éliminent la réflexion totale, si bien que de la lumière est dispersée hors du disque (1)
**caractérisé par le fait que**
• le disque (1) est plan et parallèle,
• au moins une partie des points de perturbation (3) est formée par impression blanche ou en couleur sur la surface du disque,
• les points de perturbation (3) étant chacun couverts à l'extérieur d'une couche imperméable à la lumière,
• dont la surface est supérieure ou égale à celle de chaque point de perturbation (3).

2. Dispositif selon la revendication 1, **caractérisé par le fait que** la couche imperméable à la lumière est une couche réfléchissante (4).

3. Dispositif éclairant selon la revendication 1 ou 2, **caractérisé par le fait que** chaque couche imperméable à la lumière est recouverte sur sa face extérieure par une couche absorbante (5).

4. Dispositif selon une des revendications précédentes, **caractérisé par le fait que** l'épaisseur et/ou la dilation de surface des points de perturbation (3) augmente avec la distance par rapport à la source lumineuse.

5. Dispositif éclairant selon une des revendications suivantes, **caractérisé par le fait que** les points de perturbation sont formés en tant que disques et/ou lignes.

6. Dispositif éclairant selon la revendication 4, **caractérisé par le fait que** la part de la surface recouverte par les couches imperméables à la lumière (4) et/ou des couches absorbantes (5) sur la surface du disque est indépendante de la distance par rapport à la source lumineuse et constante.

7. Dispositif éclairant selon une des revendications précédentes, **caractérisé par le fait que** les couches imperméables à la lumière et/ou les couches absorbantes sont produites par sérigraphie et/ ou par vaporisation.

8. Dispositif éclairant selon une des revendications précédentes, **caractérisé par le fait qu'**un cadre (8) porte le disque plan et parallèle (1) et réceptionne le document (7) d'une façon permettant son détachement.

9. Dispositif éclairant selon la revendication 8, **caractérisé par** un dispositif de pivotement (11) permettant l'échange des faces du disque plan et parallèle (1) par rapport au cadre (8).

10. Dispositif éclairant selon la revendication 8 ou 9, **caractérisé par le fait que** les composants électroniques sont logés dans le cadre (8).
